# EUROPEAN PATENT SPECIFICATION

(11) **EP 3 720 277 B1**
(45) Date of publication and mention of the grant of the patent: **29.06.2022**
(21) Application number: 18803443.3
(22) Date of filing: 21.11.2018
(51) Int. Cl.: A01K 31/17, A01K 31/18, A01K 31/22

(54) **BARN-TYPE POULTRY FARMING SYSTEM**
STALLGEFLÜGELHALTUNGSSYSTEM
SYSTÈME D'ÉLEVAGE DE VOLAILLE TYPE POULAILLER

(30) Priority: 06.12.2017 IT 201700140765
(43) Date of publication of application: 14.10.2020
(73) Proprietor: Officine Facco & C. S.p.A., 35010 Campo San Martino (IT)
(72) Inventor: FINCO, Massimo, 35122 Padova (IT)
(74) Representative: Modiano, Micaela Nadia
(86) International application number: PCT/EP2018/082024
(87) International publication number: WO 2019/110300

(56) References cited:
- EP-A2- 2 878 195
- WO-A1-2016/062701
- DE-U1-202005 010 086
- DE-U1-202006 007 463

## Description

The present invention relates to a barn-type poultry farming system.

Currently, the installation of sheds inside which cages containing laying hens are arranged is widespread in the poultry farming sector.

Some farms use the high density of "battery" systems, in which the cages are arranged one above the other on metallic supporting frames according to a multistorey configuration, in order to optimize spaces and costs.

If the batteries are tall, walkways are installed between them, one in the intermediate storey or multiple ones at different heights, which constitute corridors for the inspection of the cages and spaces for the feed dispensers and for the egg collection devices.

Systems thus provided are efficient from the point of view of utilization of the production capacity in the available spaces, given the high population density of the sheds.

However, in recent times there has been a change in the European regulations for the protection of laying hens, based on the need to improve the conditions of well-being both of hens raised in a battery with the current methods and of those raised with other systems.

The regulations therefore prevent the use of "battery" systems and favor barn-type ones.

The barn-type system provides for indoor farming on multiple storeys of open cages, which makes it possible to increase the density of the animals with respect to simple free-range raising, but reduces it considerably with respect to battery systems.

A facility for providing such a system can have at most four levels which are superimposed at a distance that is set by the rules and regulations (European regulations) in force, arranged so as to prevent the droppings of the upper storeys from falling onto the lower levels.

However, the hens must be encouraged to move in a three-dimensional space, and this occurs if the feed dispensers and the water troughs are arranged on the various levels.

In order to allow the animals to move from one storey to the other, there is a certain number of perches or other similar means to facilitate the ascent of the animal to the upper storeys.

By virtue of these perches, the hens are able to ascend to the upper storeys of the batteries, moving from one perch at a first level of a first battery to a second perch at an upper level of the adjacent second battery, moving with small hops or flights between one fixture and the other.

The changes to the regulations therefore prevent farmers from continuing to use already-installed battery systems and therefore systems with a high density of laying hens.

The density of laying hens in barn-type systems is lower than that of a battery system, and a replacement of the systems obviously entails a reduction in productivity for farmers.

Prior art poultry farming systems are for example described in EP 2 878 195 A2 and in DE 20 2006 007 463 U1.

The aim of the present invention is to provide a barn-type poultry farming system that can improve the background art in one or more of the aspects indicated above.

Within this aim, an object of the invention is to propose a barn-type poultry farming system with high population density.

Another object of the invention is to adapt the systems that are already installed and in use to the regulations in force.

Furthermore, an object of the present invention is to overcome the drawbacks of the prior art in a manner that is alternative to any existing solutions.

Another object of the invention is to provide a poultry farming system that is highly reliable, relatively easy to provide and low cost.

This aim, as well as these and other objects which will become better apparent hereinafter, are achieved by a farming system according to claim 1, optionally provided with one or more of the characteristics of the dependent claims.

Further characteristics and advantages of the invention will become better apparent from the description of a preferred, but not exclusive, embodiment of the poultry farming system according to the invention, illustrated by way of non-limiting example in the accompanying drawings, wherein:
Figure 1 is a schematic front elevation view of a poultry farming system according to the invention;
Figure 2 is an enlarged-scale view of a detail of Figure 1;
Figure 3 is a schematic front elevation view of another poultry farming system according to the invention;
Figure 4 is a schematic perspective view of the interior of some cages of the system according to the invention.

With reference to the cited figures, the poultry farming system according to the invention is designated generally by the reference numeral 10. It comprises, on a supporting frame, at least one multistorey battery 11 of farming cages 12. At one side of the battery 11 there is a free area 14 on which the poultry can walk and for transit to cages of different farming levels 18, 19, 20, 21, on the side directed toward the free area 14 the cages 12 being open, facilitating the entry and exit of the poultry, and being provided with perches 15, 22.

The poultry farming system 10 comprises a plurality of multistorey batteries 11 which are arranged mutually side by side and between which there are, alternately, inspection corridors 13 for human beings and free areas 14 on which the poultry can walk and for transit from the cages of one battery to the other and on different farming levels 18, 19, 20, 21.

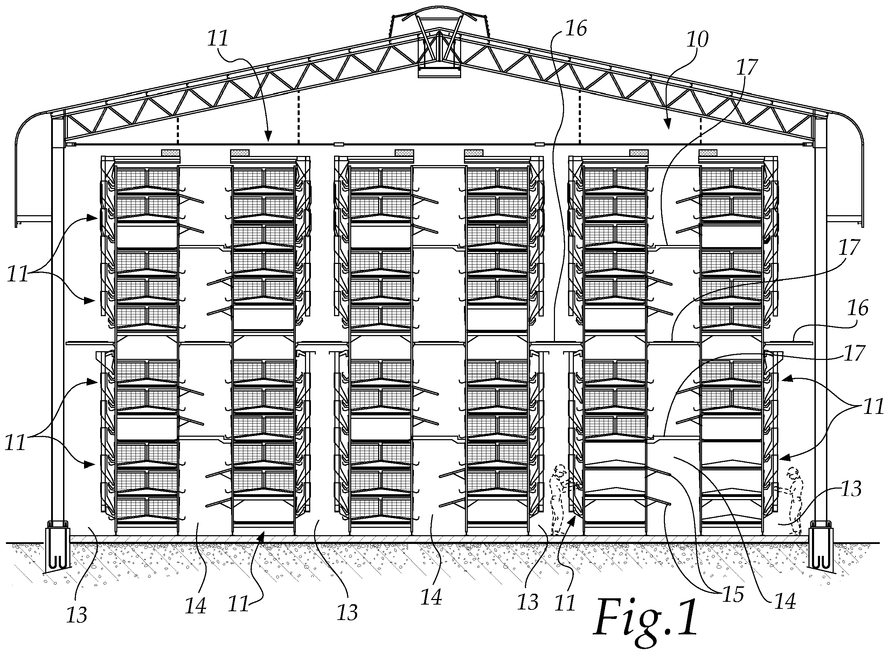

Figure 1 is a schematic front elevation view of a system 10 according to the invention, of the type also provided with walkways 16 at the intermediate storey in order to allow the passage of human beings in the inspection corridors 13 at an intermediate storey.

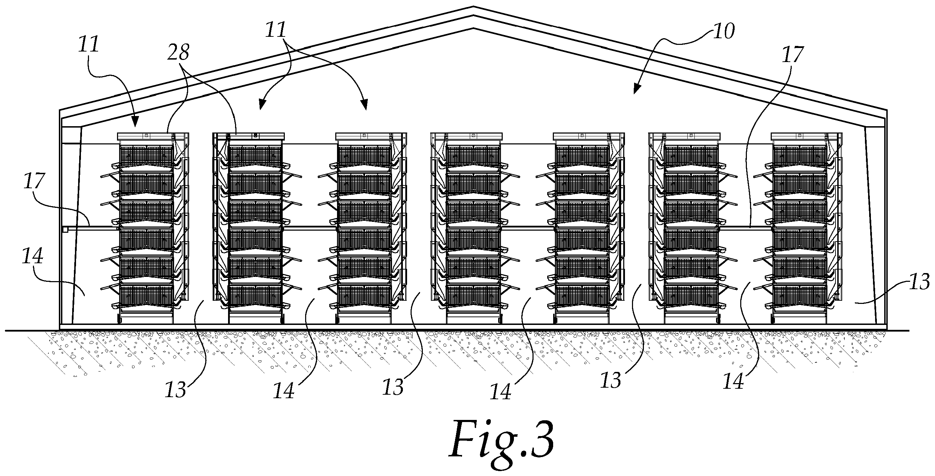

Figure 3 instead shows a version without walkways.

As can be seen in both figures, loitering surfaces 17 for the poultry are present in the free areas and delimit the farming levels 18, 19, 20, 21 in an upward or downward region.

The levels are defined by the storeys of the cages 12 and of the loitering surfaces 17, between which the birds are free to move with small hops or flights.

Furthermore, the loitering surfaces 17 create a ground which is termed "litter" in the poultry farming sector and is regulated in terms of mandatory surface in order to recreate a natural environment for the roaming of the animals. The litter is in fact defined as material in the brittle state which allows the laying hens to satisfy their ethological requirements.

The cages 12 are provided with external perches on the side directed toward the free area 14, which allow the animals to move from one level to the other, facilitating their ascent toward the upper levels.

The system comprises stacks of batteries 11 so as to define four farming levels 18, 19, 20, 21, in compliance with the provisions of the European regulations in force, under which there must be at most four levels. It is preferable not to exceed three farming levels, so as to avoid rendering burdensome the maintenance and in particular the inspection of the cages (especially on the side of the free area 14, where external perches 15 are present).

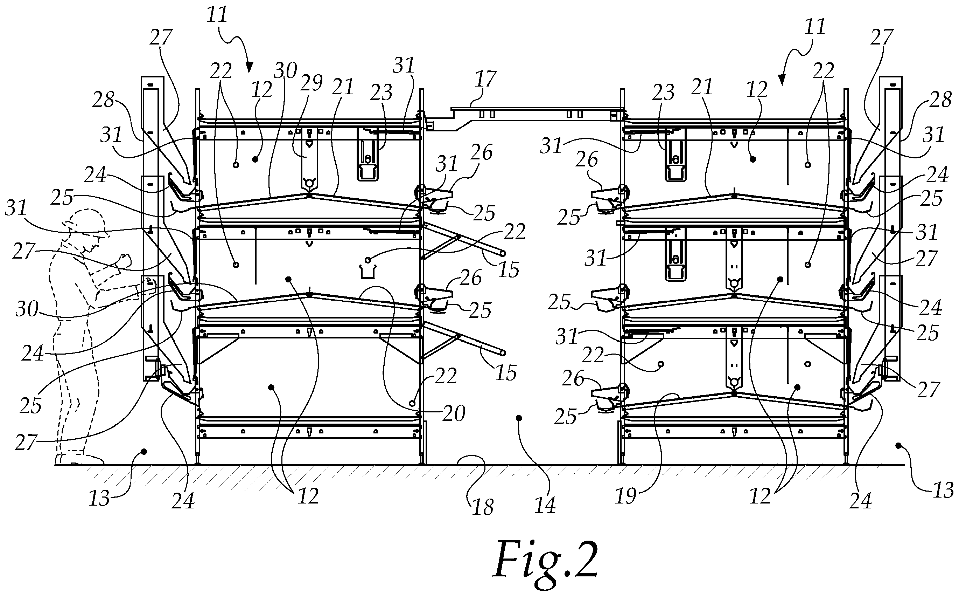

Figure 2 is an enlarged-scale view of the lower right part of Figure 1. In particular, it is a part of the system in which the cages are shown without mesh in order to show their interior.

The farming levels 18, 19, 20, 21 are indicated in such figure, and so are other details such as the external perches 15.

Each cage 12 is provided with internal perches 22 in order to encourage the poultry to move in a three-dimensional space, even inside the cage.

The system 10 further comprises a feed dispenser 23 which is internal to the cages 12 and which, together with an external feed dispenser 24, makes it possible to meet the requirements of the regulations, according to which each bird must have available at least 10 cm of linear feed dispenser length.

At least on the side of the free area 14, each cage 12 is provided with at least one basket 25 for collecting the laid eggs, which is surmounted by a cover 26 for protection against poultry treading.

The distribution of the feed, with the internal feed dispensers 23 and the external feeder dispensers 24, the egg collection means, the water distribution means, the droppings collection means and the other subsystems operating inside the shed are subsystems which are automated in a known manner.

In particular, as regards the distribution of the feed, it can be noted that the external feed dispensers 24 are installed directly on the side of the cages 12 that is directed toward the inspection corridor 13 and are supplied by adapted distribution units 27 of an adapted automated supply system installed in the shed. This system can comprise, for each series of batteries 11, a supply truck 28, of a known type, which can move along the inspection corridor 13 (passing through it along its length), supplying the feed dispensers 24 with the feed.

The type of supplying in a system 10 according to the invention may also be different, for example with spirals and circular feed dispensers.

Furthermore, according to a variation which is not shown, the internal feed dispensers can fully meet the supply requirements, as long as they are adequately sized as a function of the number of animals, fully replacing the external feed dispensers. Distribution circuits for the internal feed dispensers can be installed also between the different stacks of batteries (preferably with the exception of the end regions, in order to avoid limiting the possibility of working in those regions).

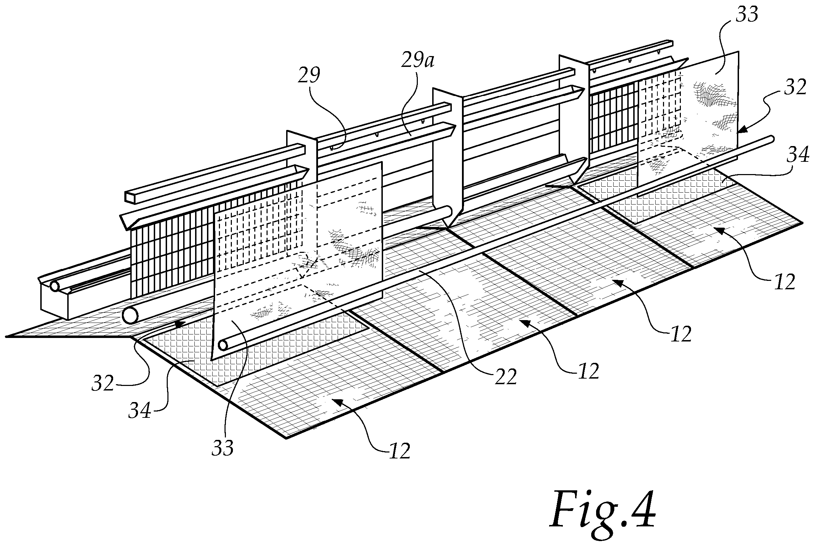

The system must be provided with an apparatus for distributing water in adapted water troughs 29, in a number and with an arrangement which are consistent with the number of animals present. Figure 4 indicates and clearly shows the water trough 29, which is arranged centrally and is provided with a drip catching channel 29a.

For the collection of the eggs, preferably the baskets 25 are extended along the entire length of the respective battery 11, and are conveniently mounted directly on the cages 12 and at the lower outer side of the inclined treading bottom 30 of the respective cage 12. The inclined bottom 30 facilitates the descent of the laid eggs into the baskets 25. Egg conveyor belts, not shown and of a known type, can be present on the bottom of the baskets 25.

The inclined bottom 30 of the cages 12 is provided with two surfaces which are inclined downward in the direction respectively of the inspection corridor 13 and of the free area 14. The baskets 25 are present in both regions. The ones in the free area 14, as mentioned previously, are surmounted by the covers 26.

The drippings collection means are not shown but are of a known type and can comprise a collection tray arranged below each cage 12 and extending along the entire length thereof and a conveyor belt inside the tray for the extraction of the droppings from the farming batteries and for their conveyance toward a drying machine.

Each cage 12 has, along its length, doors 13 both on the side of the inspection corridor 13 and on the side of the free area 14. As can be seen in Figure 2, the doors 31 on the side of the free area 14 are conveniently kept open in order to facilitate the entry and exit of the birds, while on the side of the inspection corridor 13 they are kept closed and can be opened when needed for the necessary movement of the animals. As an alternative, there can be no doors present on the side of the inspection corridor 13.

The system 10 according to the invention can comprise one or more nests 32. The nest is defined as a separate space, the components of which exclude, for the floor, any use of metallic mesh that might come into contact with the birds, and which is provided for the laying of the eggs of a single hen or of a group of hens (group nest).

According to the European regulations in force, there must be at least one nest per seven laying hens and, if group nests are used, there must be a surface of at least 1 m² for a maximum of one hundred and twenty laying hens. In the system 10 according to the invention, these nests can be of a known type, for example nests of the traditional type for cages (with a curtain) or for free-range farming.

The nests 32 are clearly visible in Figure 4. For each nest it is possible to distinguish a curtain 33 and a floor 34 not made of metallic mesh, for example made of plastic.

It should be noted that this poultry farming system 10 according to the invention can derive from an adaptation of battery systems to the European regulations in force.

In particular, it can be noted that Figure 1 shows a barn-type system derived from the conversion of a battery system of the type with walkways, whereas Figure 3 shows a barn-type system which derives from the conversion of a battery system without walkways.

Originally, each one of the battery systems was provided with inspection corridors between the stacks of batteries, whereas following the adaptation to a barn-type system, with the characteristics described above and in complying with the current regulations, the inspection corridors 13 have been alternated with the free areas 14, with the presence of, preferably, no more than four superimposed levels.

The invention can thus be applied to new installations, making it possible to obtain barn-type systems with the production advantages of battery systems, or it can be used to convert existing battery systems to barn systems. This possibility enables entrepreneurs to avoid replacing existing battery systems and at the same time to maintain or increase the production level, while complying with the current regulations.

In practice it has been found that the invention achieves the intended aim and objects, providing a barn-type system with high population density in compliance with the most recent regulations for the protection of laying hens.

The invention thus conceived is susceptible of numerous modifications and variations, all of which are within the scope of the appended claims; all the details may further be replaced with other, technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A barn-type poultry farming system comprising on a supporting frame, a plurality of multistorey batteries (11) of farming cages (12), wherein said multistorey batteries (11) are arranged mutually side by side and between them there are, alternately, inspection corridors (13) for human beings and free areas (14) on which the poultry can walk and for transit from the cages of one battery to the other and on different farming levels (18, 19, 20, 21), said cages (12) being open and provided with perches (15, 22) on the side directed toward said free area (14).

2. The poultry farming system according to claim 1, **characterized in that** in said free areas (14) there are loitering surfaces (17) for the poultry which delimit the farming levels (18, 19, 20, 21) in an upward or downward region.

3. The poultry farming system according to one or more of the preceding claims, **characterized in that** said cages (12) are provided with external perches (15) on the side directed toward said free area (14).

4. The poultry farming system according to one or more of the preceding claims, **characterized in that** said cages (12) are provided with internal perches (22).

5. The poultry farming system according to one or more of the preceding claims, **characterized in that** it comprises at least one feed dispenser (23) which is internal to said cages (12).

6. The poultry farming system according to one or more of the preceding claims, **characterized in that** each cage (12) is provided, at least on the side of the free area (14), with at least one basket (25) for collecting the laid eggs, which is surmounted by a cover (26) for protection against poultry treading.

## Patentansprüche

1. Ein Stallgeflügelhaltungssystem, das an einem Tragrahmen eine Vielzahl mehrstöckiger Batterien (11) von Haltungskäfigen (12) umfasst, wobei die mehrstöckigen Batterien (11) nebeneinander angeordnet sind und sich zwischen ihnen abwechselnd Überwachungskorridore (13) für Menschen und freie Bereiche (14) befinden, auf denen das Geflügel gehen kann, und für den Übergang von den Käfigen einer Batterie zur anderen und auf verschiedenen Haltungsebenen (18, 19, 20, 21), wobei die Käfige (12) offen und auf der dem freien Bereich (14) zugewandten Seite mit Hühnerstangen (15, 22) ausgestattet sind.

2. Das Stallgeflügelhaltungssystem gemäß Anspruch 1, **dadurch gekennzeichnet, dass** sich in den freien Bereichen (14) Aufenthaltsflächen (17) für das Geflügel befinden, die die Haltungsebenen (18, 19, 20, 21) nach oben oder unten begrenzen.

3. Das Stallgeflügelhaltungssystem gemäß einem oder mehreren der obigen Ansprüche, **dadurch gekennzeichnet, dass** die Käfige (12) auf der dem freien Bereich (14) zugewandten Seite mit externen Hühnerstangen (15) ausgestattet sind.

4. Das Stallgeflügelhaltungssystem gemäß einem oder mehreren der obigen Ansprüche, **dadurch gekennzeichnet, dass** die Käfige (12) mit internen Hühnerstangen (22) ausgestattet sind.

5. Das Stallgeflügelhaltungssystem gemäß einem oder mehreren der obigen Ansprüche, **dadurch gekennzeichnet, dass** es mindestens einen Futterspender (23) umfasst, der innerhalb der Käfige (12) liegt.

6. Das Stallgeflügelhaltungssystem gemäß einem oder mehreren der obigen Ansprüche, **dadurch gekennzeichnet, dass** jeder Käfig (12) mindestens an der Seite des freien Bereichs (14) mit mindestens einem Korb (25) zum Sammeln der gelegten Eier ausgestattet ist, der unter einem Dach (26) zum Schutz vor Geflügeltreten liegt.

## Revendications

1. Système d'élevage de volaille de type poulailler comportant sur un bâti de support, une pluralité de batteries à étages multiples (11) de cages d'élevage (12), dans lequel lesdites batteries à étages multiples (11) sont agencées mutuellement côte à côte et entre elles il y a, de manière alternée, des couloirs d'inspection (13) pour des êtres humains et des zones libres (14) sur lesquelles la volaille peut marcher et pour un transit à partir des cages d'une batterie à l'autre et sur différents niveaux d'élevage (18, 19, 20, 21), lesdites cages (12) étant ouvertes et pourvues de perchoirs (15, 22) du côté dirigé vers ladite zone libre (14) .

2. Système d'élevage de volaille selon la revendication 1, **caractérisé en ce que** dans lesdites zones libres (14), il y a des surfaces de déambulation (17) pour la volaille qui délimitent les niveaux d'élevage (18, 19, 20, 21) dans une région vers le haut ou vers le bas.

3. Système d'élevage de volaille selon une ou plusieurs des revendications précédentes, **caractérisé en ce que** lesdites cages (12) sont pourvues de perchoirs externes (15) du côté dirigé vers ladite zone libre (14).

4. Système d'élevage de volaille selon une ou plusieurs des revendications précédentes, **caractérisé en ce que** lesdites cages (12) sont pourvues de perchoirs internes (22).

5. Système d'élevage de volaille selon une ou plusieurs des revendications précédentes, **caractérisé en ce qu'**il comporte au moins un distributeur de nourriture (23) qui est interne auxdites cages (12).

6. Système d'élevage de volaille selon une ou plusieurs des revendications précédentes, **caractérisé en ce que** chaque cage (12) est pourvue, au moins du côté de la zone libre (14), d'au moins un panier (25) pour recueillir les œufs pondus, qui est surmonté d'un couvercle (26) pour assurer une protection contre le piétinement par la volaille.
